# EUROPÄISCHE PATENTSCHRIFT

(11) **EP 0 472 000 B1**
(45) Veröffentlichungstag und Bekanntmachung des Hinweises auf die Patenterteilung: **29.03.1995**
(21) Anmeldenummer: 91112460.0
(22) Anmeldetag: 25.07.1991
(51) Int. Cl.: B65G 69/28

(54) **Überladebrücke für Rampen**
Loading bridge for ramps
Pont de transbordement pour rampes

(30) Priorität: 07.08.1990 DE 4024975
(43) Veröffentlichungstag der Anmeldung: 26.02.1992
(73) Patentinhaber: Alten, Kurt, D-30974 Wennigsen (DE)
(72) Erfinder: Alten, Kurt, D-30974 Wennigsen (DE)
(74) Vertreter: Depmeyer, Lothar

(56) Entgegenhaltungen:
- GB-A- 785 785
- GB-A- 928 298

## Beschreibung

Die Erfindung betrifft eine Überladebrücke für Rampen nach dem Oberbegriff des Anspruchs 1.

Insb. bei solchen Überladebrücken, deren Tragkonstruktion ein Stahlgerüst und die unterhalb der Brückenplatte mit einer gegenüber der Brückenplatte breiteren Einschubtasche für Ladehilfen der zu be- bzw. entladenden Fahrzeuge aufweisen, besteht die Gefahr, dass bei in der Ruhestellung der Brückenplatte befindlicher Überladebrücke und einer dabei gegebenen Belastung von oben eine Aufhebung des Spaltes seitlich neben der Brückenplatte eintritt, indem sich die Tragkonstruktion sogar seitlich an der Brückenplatte abstützt. Zwar kommt es im allgemeinen nach Aufhebung der Belastung zu einer Rückverformung der Tragkonstruktion, jedoch können häufige Belastungen zu unerwünschten Verformungen führen und die Bewegungsabläufe stören; die Spaltbreite verringert sich. Die Funktionstüchtigkeit der Brücke ist infrage gestellt.

Der Erfindung liegt die Aufgabe zugrunde, diese Nachteile zu beseitigen und demgemäss sicherzustellen, dass auch bei leichteren Konstruktionen elastische Verformungen der Tragkonstruktion nicht zu einer Beeinträchtigung des Brückenbetriebes führen können.

Zur Lösung dieser Aufgabe werden erfindungsgemäss die Merkmale nach dem Kennzeichnungsteil des Anspruchs 1 vorgeschlagen.

Bevorzugte Ausführungsformen der Erfindung sind in den abhängigen Ansprüchen angegeben.

Diese Abstandshalter gewährleisten eine Mindestspaltbreite, um so die Bewegungsabläufe der Überladebrücke, also ungehinderte Schwenkbewegungen der Brückenplatte durchführen zu können. Bei unter den vorgenannten Bedingungen eintretenden Verformungen der Tragkonstruktion z.B. Biegungen oder Verwindungen kann zwar eine gewisse Verformung nach wie vor eintreten, jedoch bleibt stets eine Mindestspaltbreite erhalten, die gerade so gross sein muss, dass die Schwenkbewegung der Brückenplatte ohne weiteres durchführbar ist. Werden die Abstandshalter wirksam, so übernehmen sie die Kräfte, indem sie vorwiegend Druckkräfte übertragen, die von der Tragkonstruktion in die Brückenplatte und von dieser wieder in die Tragk-onstruktion eingeleitet werden.

Zweckmässigerweise werden diese Abstandshalter an der Tragkonstruktion angebracht, und zwar vorzugsweise so, dass sie sich nahe an der Oberfläche der Tragkonstruktion ( Begehungsfläche ) befinden. Ferner ist es sinnvoll, wenn die Abstandshalter zumindest im wesentlichen senkrecht oberhalb der tragenden, unterhalb der Brückenplatte befindlichen Verbindungsträger angeordnet werden, um Verwindungskräfte klein zu halten.

Weitere Einzelheiten der Erfindung werden anhand der Zeichnung erläutert, in Ausführungsbeispiele der Erfindung dargestellt sind. Es zeigen :
- Fig. 1: eine Draufsicht auf eine in einer Tragkonstruktion vor einer massiven Rampe befindliche Überladebrücke,
- Fig. 2: einen Schnitt nach der Linie II - II von Fig. 1,
- Fig. 3: eine Teilstirnansicht der Überladebrücke in Richtung des Pfeiles III von Fig. 1 gesehen, im Bereich des Abstandshalters teilweise geschnitten,
- Fig. 4: eine Teilansicht der Tragkonstruktion in Richtung des Pfeiles IV gemäss Fig. 3 gesehen und
- Fig. 5: einen abgewandelten Abstandshalter der Darstellung des Abstandshalters gemäss Fig. 3 entsprechend.

Vor der Gebäunderampe 1 befindet sich mit gleicher Wirkungshöhe ein stählernes Traggerüst mit zu beiden Seiten einer Brückenplatte 2 angeordneten Plattformen 3, die sich parallel zur Brückenplatte 2 erstrecken und vorne mit der Brückenplatte 2 abschliessen. Diese Tragkonstruktion dient zur Anlenkung der Brückenplatte 2 durch eine hinten gelegene Querachse 4; die Tragkonstruktion ist mit der Gebäuderampe 1 fest verbunden und stützt sich vorne an der Stirnseite über Stützen 5 ab. Unterhalb der Brückenplatte 2 sind die beiden Plattformen 3 durch einen waagerechten Träger 6 verbunden. Zwischen den Plattformen 3 und der Brückenplatte 2 ist ein Spalt S vorgesehen, um die Brückenplatte 2 ungehindert nach oben oder nach unten ( aus der dargestellten waagenachten Ruhelege ) bewegen bzw. verschwenken zu können.

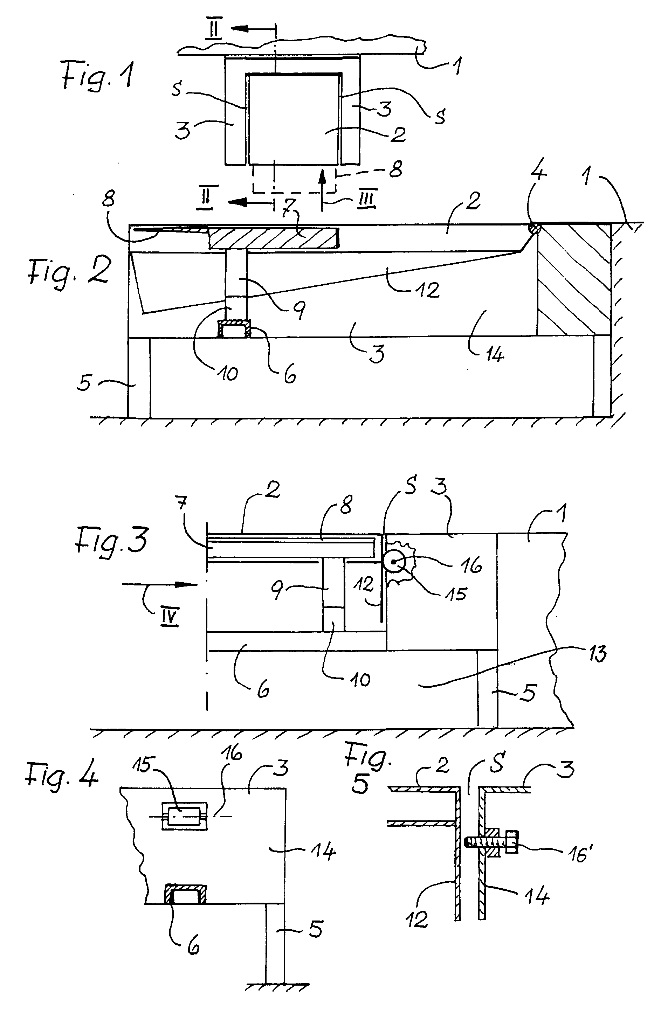

Vorne hat die Brückenplatte 2 eine Tasche zur Aufnahme eines in Brückenlängsrichtung verfahrbaren Schlittens 7, der vorne eine Verlängerung 8 trägt, über die sich die Brückenplatte 2 auf dem zu be- bzw. entladenden Fahrzeug abstützen kann. Die ausgefahrene Verlängerung 8 ist in Fig. 1 gestrichelt angedeutet, in Fig. 2 eingezogen. Die Verlängerung 8 hat zwei sich nach unten erstreckende Auflager 9, die in der Ruhestellung der Brückenplatte 2 auf senkrechten Stutzen 10 des Trägers 6 aufliegen. Diese Abstützung der Brückenplatte 2 über die Schlitten 7 bzw. seine Auflager 9 geschieht - wie Fig. 2 erkennen lässt - im Abstand von der Stirnfläche der Tragkonstruktion, die im übrigen ihre beiden Stützen 5 vorne im Bereich der Stirnfläche aufweist.

Im übrigen hat die Brückenplatte 2 an ihren seitlichen Rändern angreifende senkrechte Seitenbleche 12. Zudem befindet sich unterhalb des Trägers 6 und der beiden Plattformkonstruktionen eine druchgehende Tasche 13 zum Einführen von Verlademitteln der andockenden Fahrzeuge; diese Tasche 13 ist bewusst breiter gehalten als die Brückenplatte 2, damit für die Fahrzeuge ausreichende Rangiermöglichkeiten bestehen.

Senkrecht oberhalb des Trägers 6 befindet sich in der der Brückenplatte 2 zugekehrten Wandung 14 der Tragkonstruktion, und zwar im Bereich des oberen Randes eine Rolle 15 mit waagerechter, sich nach hinten erstreckender Achse 16. Diese Rolle 15 überbrückt den Spalt S ganz oder zum grössten Teil in der Weise, dass quer verlaufende Druckkräfte zwischen der Tragkonstruktion und der Brückenplatte 2 ( über deren Seitenblech 12 ) übertragen werden können. Wird die Brückenplatte 2 in der Ruhelage von oben etwa mit der Brückennennlast beaufschlagt, so wirken die beiden seitlichen Abstandshalter in Form der Rolle 15 zusammen mit der Brückenplatte 2 gewissermassen als Obergurt im Verein mit dem Träger 6. Die Rolle 15 lässt zudem bei tangentialen Kräften Abrollbewegungen zu, also z.B. Schwenkbewegungen der Brückenplatte 2.

Der Abstandshalter gemäss Fig. 5 wird von einem Stellbolzen 16' gebildet, der im Abstand von der Brückenplatte 2 endet und erst nach einer gewissen elastischen Verformung des Traggerüstes wirksam wird. Ist die elastische Verformung beendet, so stellt sich wiederum die kleine Distanz ein. Auch dieser Distanzhalter stellt die erwähnte kraftschlüssige Verbindung her.

Aufgrund der Erfindung kann eine vergleichsweise leichte Tragkonstruktion für die Halterung der Brückenplatte 2 und die Anbringung der seilichen Plattformen 3 gewählt werden. Die bei derartigen Konstruktionen eintretenden elastischen Verformungen können nicht zu einer Beeinträchtigung des Brückenverkehrs führen.

## Patentansprüche

1. Überladebrücke für Rampen (1) mit einer rampenseitig um eine Querachse (4) verschwenkbaren, eine ein- und ausfahrbare Verlängerung (8) aufweisenden Brückenplatte (2), die mit Spiel in einer Ausnehmung einer geringfügig elastisch nachgiebigen Tragkonstruktion (3) angeordnet ist, dadurch gekennzeichnet, dass in dem zu beiden Seiten der Brückenplatte (2) befindlichen Spalt (S) zwischen der Brückenplatte und der Tragkonstruktion (3) ein diesen Spalt zumindest teilweise überbrückender Abstandshalter (15,16) angeordnet ist.

2. Brücke nach Anspruch 1, dadurch gekennzeichnet, dass die Abstandshalter (15,16) an der Tragkonstruktion befestigt sind.

3. Brücke nach Anspruch 1, dadurch gekennzeichnet, dass die Abstandshalter (16) verstellbar ausgeführt sind.

4. Brücke nach Anspruch 1, dadurch gekennzeichnet, dass die Abstandshalter (15,16) im Bereich des als Begehfläche dienenden oberen Randes der Tragkonstruktion angeordnet sind.

5. Brücke nach Anspruch 1, dadurch gekennzeichnet, dass sich die Abstandshalter (15,16) praktisch senkrecht oberhalb eines Trägers (6) angeordnet sind, der die zu beiden Seiten der Brückenplatte (2) angeordneten Teile der Tragkonstruktion verbindet und auf dem sich das vorders Ende der Brückenplatte (2) in der Ruhestellung abstützt.

6. Brücke nach Anspruch 1, dadurch gekennzeichnet, dass die Abstandshalter (15) Rollkörper mit waagerechter Drehachse (16) sind.

7. Brücke nach Anspruch 1, dadurch gekennzeihnet, dass die Abstandshalter mit einem freien Abstand vom benachbarten Teil der Überladebrücke bzw. der Tragkonstruktion in einer solchen Abstandsgrösse angeordnet sind, dass die Brückenplatte (2) bzw. die Tragkonstruktion bei einer Brückenplattenverschwenkung gerade unberührt bleibt.

## Claims

1. Loading bridge for ramps (1), having a bridge plate (2), which is pivotable about a transverse axle (4) at the ramp end and has a retractable and extendable extension member (8), said bridge plate being disposed with some clearance in a recess in a slightly elastically resilient supporting structure (3), characterised in that a spacer member (15, 16), which at least partially bridges a gap (S), is disposed in said gap between the bridge plate and the supporting structure (3), said gap being situated on both sides of the bridge plate (2).

2. Bridge according to claim 1, characterised in that the spacer members (15, 16) are secured to the supporting structure.

3. Bridge according to claim 1, characterised in that the spacer members (16) are adjustable.

4. Bridge according to claim 1, characterised in that the spacer members (15, 16) are disposed in the region of the upper edge of the supporting structure, said edge serving as a walking surface.

5. Bridge according to claim 1, characterised in that the spacer members (15, 16) are disposed virtually perpendicularly above a carrier (6), which joins the parts of the supporting structure disposed on both sides of the bridge plate (2), and on which carrier the front end of the bridge plate (2) is supported in the inoperative position.

6. Bridge according to claim 1, characterised in that the spacer members (15) are roller bodies having a horizontal rotary axle (16).

7. Bridge according to claim 1, characterised in that the spacer members are disposed with a free spacing from the adjacent part of the loading bridge, or respectively of the supporting structure, at such a distance that the bridge plate (2), or respectively the supporting structure, remains totally unaffected by a pivotal movement of the bridge plate.

## Revendications

1. Passerelle de transbordement pour des rampes (1) comportant un panneau de passerelle (2) qui peut basculer autour d'un axe transversal (4) du côté de la rampe, possède un prolongement (8) pouvant être rétracté et déployé et qui est monté avec un certain jeu dans un évidement d'une structure de support (3) qui peut légèrement fléchir élastiquement, caractérisée par le fait que dans la fente (S) située des deux côtés du panneau de passerelle (2), entre ce panneau de passerelle et la structure de support (3), est disposée une entretoise (15,16), qui recouvre au moins partiellement cette fente.

2. Passerelle suivant la revendication 1, caractérisée par le fait que les entretoises (15,16) sont fixées à la structure de support.

3. Passerelle suivant la revendication 1, caractérisée par le fait que les entretoises (16) sont réalisées de manière à être réglables.

4. Passerelle suivant la revendication 1, caractérisée par le fait que les entretoises (15,16) sont disposées dans la zone du bord supérieur, utilisé comme surface sur laquelle on peut marcher, de la structure de support.

5. Passerelle suivant la revendication 1, caractérisé par le fait que les entretoises (15,16) sont disposées pratiquement perpendiculairement au-dessus d'un support (6), qui relie les parties de la structure de support, qui sont disposées des deux côtés du panneau de passerelle (2), et prend appui, dans la position de repos, sur l'extrémité avant du panneau de passerelle (2).

6. Passerelle suivant la revendication 1, caractérisée par le fait que les entretoises (15) sont des corps roulants possédant un axe de rotation horizontal (16).

7. Passerelle suivant la revendication 1, caractérisée par le fait que les entretoises sont disposées à une distance libre de la partie voisine de la passerelle de transbordement ou de la structure de support, à une distance telle qu'il n'y a précisément aucun contact avec le panneau de passerelle (2) ou la structure de support lors d'un basculement du panneau de passerelle.
